# EUROPÄISCHE PATENTANMELDUNG

(11) **EP 3 518 628 A1**
(43) Veröffentlichungstag der Anmeldung: **31.07.2019**
(21) Anmeldenummer: 19153679.6
(22) Anmeldetag: 25.01.2019
(51) Int. Cl.: H05B 37/02, H05B 33/08

(54) **HELLIGKEITSSENSOR AUF LED-MODUL**

(30) Priorität: 26.01.2018 DE 102018101797
(71) Anmelder: Siteco Beleuchtungstechnik GmbH, 83301 Traunreut (DE)
(72) Erfinder: Hofinger, Christoph, 83236 Übersee (DE)
(74) Vertreter: Schmidt, Steffen

(57) **Zusammenfassung**

Die Erfindung betrifft eine Leuchte mit einem zum Abgeben von Licht an die Umgebung betreibbaren Leuchtmittel und einer zum Aktivieren des Leuchtmittels in Abhängigkeit von der Umgebungshelligkeit betreibbaren Steuereinrichtung, wobei der Steuereinrichtung eine zum Erfassen der Umgebungshelligkeit ausgelegte und zum Abgeben eines die Umgebungshelligkeit darstellenden Helligkeitssignals betreibbare Sensoreinrichtung zugeordnet ist, wobei die Steuereinrichtung zum Unterbrechen der Abgabe von Licht an die Umgebung für die Dauer eines Dunkelintervalls und zum Abfragen und Auswerten des Helligkeitssignals während des Dunkeltastintervalls ausgelegt ist.

## Beschreibung

Die vorliegende Erfindung betrifft eine Leuchte mit einem zum Abgeben von Licht an die Umgebung betreibbaren Leuchtmittel und einer zum Aktivieren des Leuchtmittels in Abhängigkeit von der Umgebungshelligkeit betreibbaren Steuereinrichtung, wobei der Steuereinrichtung eine zum Erfassen der Umgebungshelligkeit ausgelegte und zum Abgeben eines die Umgebungshelligkeit darstellenden Signals betreibbare Sensoreinrichtung zugeordnet ist, sowie ein Verfahren zum Betreiben einer solchen Leuchte.

Derartige Leuchten werden unter anderem als Außenleuchten eingesetzt. Zum Einsparen von Energie ist es dabei gewünscht, dass die Leuchte nicht über einen Zeitraum von 24 Stunden pro Tag mit Strom versorgt wird. Das Ein- und Ausschalten der Leuchte soll in Abhängigkeit von der Umgebungshelligkeit automatisch erfolgen. Zu diesem Zweck sind entsprechende Leuchten üblicherweise mit einer zum Erfassen der Umgebungshelligkeit ausgelegten Sensoreinrichtung ausgestattet. Ein von der Sensoreinrichtung abgegebenes und die Umgebungshelligkeit darstellendes Helligkeitssignal kann dann von einer geeigneten Steuereinrichtung ausgewertet und zum Aktivieren des Leuchtmittels in Abhängigkeit von der Umgebungshelligkeit benutzt werden. Dabei wird überprüft, ob das Helligkeitssignal ein vorgegebenes Kriterium erfüllt. Sobald dieses Kriterium nicht mehr erfüllt wird bzw. die Umgebungshelligkeit einen vorgegebenen Wert überschreitet, kann die Aktivierung des Leuchtmittels beendet werden.

Beim Aufbau entsprechender Leuchten muss allerdings darauf geachtet werden, dass die Sensoreinrichtung das von dem Leuchtmittel selbst abgegebene Licht nicht erfasst. Bei einer unsachgemäßen Anbringung der Sensoreinrichtung kann die Erfassung des von dem Leuchtmittel abgegebenen Lichts zu einer Rückkopplung führen. Dann wird das Leuchtmittel in schneller Folge aktiviert und wieder deaktiviert.

Im Stand der Technik wird dieses Problem dadurch gelöst, dass die Sensoreinrichtung an einer der Lichtaustrittsseite der Leuchte entgegengesetzten Seite des Leuchtengehäuses montiert wird. Allerdings hat es sich gezeigt, dass auch durch eine derartige Montage der Sensoreinrichtung ein zuverlässiger Betrieb der Leuchte nicht sichergestellt werden kann.

Angesichts dieser Probleme im Stand der Technik liegt der Erfindung die Aufgabe zugrunde, eine als Außenleuchte einsetzbare Leuchte bereitzustellen, mit der ein zuverlässiger Leuchtenbetrieb gewährleistet werden kann. Erfindungsgemäß wird diese Aufgaben durch eine Weiterbildung der bekannten Leuchten gelöst, die im Wesentlichen dadurch gekennzeichnet ist, dass die Steuereinrichtung zum Unterbrechen der Abgabe von Licht an die Umgebung für die Dauer eines Dunkelintervalls und zum Abfragen und/oder Auswerten des Helligkeitssignals während des Dunkelintervalls ausgelegt ist.

Im Rahmen dieser Erfindung wird von der Erkenntnis Gebrauch gemacht, dass auch bei der beschriebenen Montage der Sensoreinrichtung gemäß dem Stand der Technik nicht in jedem Fall ausgeschlossen werden kann, dass von der Leuchte selbst abgegebenes Licht von der Sensoreinrichtung erfasst wird. Ferner wird von der Erkenntnis Gebrauch gemacht, dass die Betriebszuverlässigkeit der bekannten Leuchten auch durch Verschmutzungen und Beeinflussungen durch Schnee, Laub oder Moos und ein dadurch verursachtes frühes Einschalten oder andauerndes Einschalten auch am Tag beeinträchtigt werden kann.

Bei einer erfindungsgemäßen Leuchte kann die Sensoreinrichtung vollständig unabhängig von der Lage der Leuchtmittel montiert werden, weil eine Auswertung des Helligkeitssignals nur dann erfolgt, wenn die Lichtabgabe durch das Leuchtmittel unterbrochen ist. Das Sensorsignal wird daher keinesfalls von dem von dem Leuchtmittel selbst abgegebenen Licht beeinflusst. Schon dadurch wird eine Erhöhung der Betriebszuverlässigkeit erfindungsgemäßer Leuchten erreicht, weil eine Beeinflussung des Helligkeitssignals, welches die Umgebungshelligkeit darstellen soll, durch das Leuchtmittel selbst durch die entsprechende Abfrage bzw. Auswertung des Helligkeitssignals ausgeschlossen wird.

Darüber hinaus ist es bei erfindungsgemäßen Leuchten auch möglich, die Sensoreinrichtung zumindest teilweise in einem vorzugsweise durch das Leuchtmittel selbst bereitgestellten geschützten Bauraum unterzubringen. Sofern als Leuchtmittel ein LED-Modul zum Einsatz kommt, kann die Sensoreinrichtung in einem geschützten Bauraum des LED-Moduls angeordnet werden. Es muss dann auch nicht mehr befürchtet werden, dass das Helligkeitssignal durch Schnee, Laub oder Moos beeinflusst wird, weil die Lichtabgabe bei einem entsprechenden Modul üblicherweise im Wesentlichen in Schwererichtung erfolgt. Bei entsprechender Ausrichtung der Sensoreinrichtung ist nicht zu befürchten, dass sich im Erfassungsbereich der Sensoreinrichtung Laub, Moos oder Schmutz ablagert. Das führt zu einer weiteren Verbesserung der Betriebszuverlässigkeit erfindungsgemäßer Leuchten.

Die Unterbrechung der Lichtabgabe soll allerdings nicht zu einem für den Betrachter erkennbaren Helligkeitsunterschied führen. Es soll möglichst gewährleistet werden, dass der durch die Unterbrechung der Lichtabgabe verursachte Helligkeitsunterschied subjektiv gar nicht bemerkt wird. Aus diesem Grund wird die Lichtabgabe beim Betrieb erfindungsgemäßer Leuchten zweckmäßigerweise nur kurzzeitig, d. h. für einige Mikrosekunden oder Millisekunden unterbrochen, wobei dieses Unterbrechung auch nur in großen zeitlichen Abständen, wie einer Minute oder mehr, erfolgen muss, weil es sich bei der Zunahme der Umgebungshelligkeit um ein vergleichsweise langsames Ereignis handelt. Die Unterbrechung der Lichtabgabe kann ähnlich wie beim PWM-Dimmen, d. h. im Bereich von Mikrosekunden bis Millisekunden, erfolgen. Diese Unterbrechung ist kaum bemerkbar, wenn das Tastverhältnis von Hellintervall zu Dunkelintervall größer als 10³, vorzugsweise größer als 10⁴, insbesondere 10⁵ oder größer ist.

Falls als Leuchtmittel ein LED-Modul zum Einsatz kommt, kann die Unterbrechung der Abgabe von Licht durch einfache Unterbrechung der Stromzufuhr für das LED-Modul erfolgen. Da die Leuchtdioden im Unterschied zu anderen Leuchtmittel über keinerlei Nachleuchten verfügen, kann die Unterbrechung der Abgabe von Licht für einen Zeitraum von einigen Mikrosekunden durch eine einfache Unterbrechung der Stromzufuhr erfolgen. Bei anderen Leuchtmitteln kann die Unterbrechung von Licht auch durch eine Blende erfolgen.

Wie vorstehend bereits beschrieben, kann die Sensoreinrichtung bei erfindungsgemäßen Leuchten in ein Leuchtmittelmodul integriert werden. Es ist dann nicht mehr erforderlich, auf der der Lichtaustrittsseite der Leuchte abgewandten Seite der Leuchte bzw. des Leuchtengehäuses besondere Maßnahme zur Montage der Sensoreinrichtung zu ergreifen. Bislang war es erforderlich, zur Anbringung der Sensoreinrichtung auf der der Lichtaustrittsseite abgewandten Seite des Leuchtengehäuses eine gesonderte Bohrung zu setzen. Eine solche Bohrung muss zusätzlich abgedichtet werden, was mit zusätzlichem Aufwand verbunden ist. Ein entsprechender Aufwand ergibt sich auch, wenn die Sensoreinrichtung separat am Leuchtenmast verbaut wird. Zusätzlich entsteht dann ein Verdrahtungsaufwand. Ferner können Dichtungsprobleme auftreten.

Wenn die Sensoreinrichtung bei erfindungsgemäßen Leuchten in das Leuchtmittelmodul integriert wird, entfällt dieser zusätzliche Montageaufwand. Da der Erfassungsbereich nach unten ausgerichtet ist, droht auch keine starke Beeinflussung der Erfassung des Umgebungslichts durch Verschmutzungen. Dadurch kann die Betriebszuverlässigkeit erfindungsgemäßer Leuchten bei reduziertem Montageaufwand deutlich erhöht werden.

Allerdings wird dann von der Sensoreinrichtung nur das von einem kleinen Teil des von dem Sensor erfassten Untergrunds bzw. Bodens reflektierte Licht der Umgebung erfasst. Aus diesem Grund ist bei einer besonders bevorzugten Ausführungsform der Erfindung daran gedacht, der Sensoreinrichtung eine zum Ausgleichen von räumlichen Schwankungen der Umgebungshelligkeit betreibbare Ausgleichsanordnung zuzuordnen. Eine derartige Ausgleichsanordnung kann beispielsweise durch eine Linse oder eine Streuscheibe verwirklicht werden. Auch andere optische Maßnahmen können ergriffen werden, um Schwankungen der Umgebungshelligkeit auszugleichen.

Im Rahmen einer bevorzugten Ausführungsform der Erfindung wird die Information über die allgemeine Umgebungshelligkeit gemittelt. Dadurch können z. B. Spiegelungen in Pfützen oder auf nassen Straßen ausgeglichen werden.

Beim Einsatz erfindungsgemäßer Leuchten ist auch daran gedacht, der Steuereinrichtung einen Zeitgeber zuzuordnen und die Auswertung des Helligkeitssignals nur während eines von dem Zeitgeber vorgegebenen Auswertungsintervalls zuzulassen. Beispielsweise kann die Auswertung nur beim Übergang der bekannten Nachtstunden zu den bekannten Tagstunden erfolgen. Bei erfindungsgemäßen Leuchten kann dieser Übergang eingegrenzt werden, wenn die Leuchte als lernendes System ausgeführt ist. Dazu kann vorgesehen sein, dass die Steuereinrichtung zum Erfassen eines Deaktivierungszeitpunkts ausgelegt ist, zu dem das Helligkeitssignal einen vorgegebenen Wert überschreitet bzw. ein vorgegebenes Kriterium nicht mehr erfüllt und zum Einstellen des Auswertungsintervalls in Abhängigkeit von dem Deaktivierungszeitpunkt betreibbar ist. Wenn das Ende der vorhergehenden Nacht beispielsweise bekannt ist, kann etwa 30 Minuten vor dem erwarteten Sonnenaufgang mit der Erfassung bzw. Auswertung des Helligkeitssignals begonnen werden und dann der Deaktivierungszeitpunkt, zu dem das vorgegebene Kriterium nicht mehr erfüllt wird bzw. die Umgebungshelligkeit einen vorgegebenen Wert überschreitet, für die darauffolgende Nacht gespeichert werden, um so das Auswertungsintervall für die folgende Nacht festzulegen.

Wie der vorstehenden Erläuterung erfindungsgemäßer Leuchten zu entnehmen ist, ist ein Verfahren zum Betreiben einer derartigen Leuchte, insbesondere Außenleuchte, bei der ein Leuchtmittel in Abhängigkeit von der Umgebungshelligkeit zum Abgeben von Licht an die Umgebung aktiviert wird, im Wesentlichen dadurch gekennzeichnet, dass die Abgabe von Licht an die Umgebung für die Dauer eines Dunkelintervalls unterbrochen, ein die Umgebungshelligkeit darstellendes Helligkeitssignal während des Dunkelintervalls abgefragt und ausgewertet wird und das Leuchtmittel für die Dauer eines Hellintervalls aktiviert wird, wenn das Helligkeitssignal ein vorgegebenes Kriterium erfüllt bzw. wenn die Umgebungshelligkeit noch gering ist.

Zur Vermeidung einer unerwünschten Abdunkelung der Leuchte durch die Unterbrechung der Lichtabgabe während des Dunkelintervalls kann das Tastverhältnis von Hellintervall zu Dunkelintervall größer als 10³, vorzugsweise größer als 10⁴, insbesondere 10⁵ oder größer sein. Mit Blick auf das Ansprechverhalten der üblicherweise als Sensoreinrichtung eingesetzten Photodioden ist es allerdings sinnvoll, wenn das Tastverhältnis von Hellintervall zu Dunkelintervall kleiner als 10⁹ ist. Vorzugsweise ist das Tastverhältnis kleiner als 10⁸.

Wie vorstehend bereits angesprochen, kann eine erfindungsgemäße Leuchte als ein selbstlernendes System ausgeführt werden, wenn bei dem Verfahren zum Betreiben einer entsprechenden Leuchte ein Deaktivierungszeitpunkt erfasst wird, zu dem das Helligkeitssignal das vorgegebene Kriterium nicht mehr erfüllt und ein folgendes Auswertungsintervall, während dem die Auswertung des Helligkeitssignals erfolgt, in Abhängigkeit von dem Deaktivierungszeitpunkt bestimmt wird.

Nachstehend wird die Erfindung unter Bezugnahme auf die Zeichnung, auf die hinsichtlich aller erfindungswesentlichen und in der Beschreibung nicht näher herausgestellten Merkmale ausdrücklich verwiesen wird, erläutert. In der Zeichnung zeigt:
- Fig. 1: eine schematische Darstellung einer Leuchte nach dem Stand der Technik und
- Fig. 2: eine schematische Darstellung zur Veranschaulichung eines erfindungsgemäßen Verfahrens zum Betreiben einer erfindungsgemäßen Leuchte.

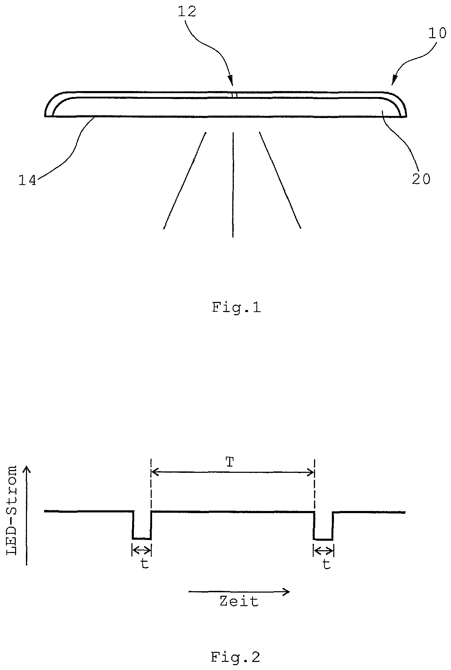

Die in Fig. 1 dargestellte Leuchte umfasst ein insgesamt mit 10 bezeichnetes Gehäuse. Das Gehäuse umfasst auf seiner nach unten gewandten Seite eine transparente Abdeckung 14. Durch die transparente Abdeckung 14 wird in dem Gehäuse 10 ein geschützter Bauraum gebildet, in dem beispielsweise ein LED-Modul aufgenommen sein kann. Auf der der transparenten Abdeckung 14 abgewandten Seite des Gehäuses 10 ist eine Bohrung 12 in der Gehäusewand vorgesehen. In der Bohrung 12 kann eine Sensoreinrichtung zum Erfassen des Umgebungslichts aufgenommen sein. Die in der Bohrung 12 aufgenommene Sensoreinrichtung erfasst von oben auf die Sensoreinrichtung auftreffendes Licht. Sofern die Bohrung 12 durch Laub, Schnee oder Verschmutzungen abgedeckt wird, kann kein Licht von der Umgebung mehr erfasst werden. Dann wird das Leuchtmittel innerhalb des Gehäuses 10 auch aktiviert, wenn die Umgebungshelligkeit dies noch nicht erfordert.

Bei dem anhand der Fig. 2 dargestellten Verfahren zum Betreiben einer Leuchte wird das von der Sensoreinrichtung abgegebene Helligkeitssignal nur während kurzer Dunkelintervalle t, während denen die Abgabe von Licht an die Umgebung unterbrochen ist, erfasst. Das Tastverhältnis der Dauer des Hellintervalls T zwischen zwei Dunkelintervallen t zur Dauer des Dunkelintervalls t beträgt bei erfindungsgemäßen Leuchten üblicherweise mehr als 10⁴, insbesondere mehr als 10⁵. Bei erfindungsgemäßen Leuchten kann die Sensoreinrichtung innerhalb des Leuchtengehäuses angeordnet werden und von unten darauf auftreffendes Licht erfassen. Eine Beeinflussung des von der Sensoreinrichtung abgegebenen Helligkeitssignals durch Verschmutzungen kann so weitgehend ausgeschlossen werden. Eine Beeinflussung des Helligkeitssignals durch das Leuchtmittel selbst wird durch die anhand der Fig. 2 erläuterte Aktivierung bzw. Deaktivierung des Leuchtmittels ausgeschlossen.

Wie vorstehend bereits angesprochen, kann die Deaktivierung des Leuchtmittels durch Unterbrechung der Stromzufuhr erfolgen. Bei anderen Ausführungsformen der Erfindung kann die Unterbrechung der Abgabe von Licht an die Umgebung durch das Leuchtmittel auch mit Hilfe geeigneter Blenden unterbrochen werden.

### BEZUGSZEICHENLISTE

- 10: Gehäuse
- 12: Bohrung
- 14: Abdeckung

## Patentansprüche

1. Leuchte mit einem zum Abgeben von Licht an die Umgebung betreibbaren Leuchtmittel und einer zum Aktivieren des Leuchtmittels in Abhängigkeit von der Umgebungshelligkeit betreibbaren Steuereinrichtung, wobei der Steuereinrichtung eine zum Erfassen der Umgebungshelligkeit ausgelegte und zum Abgeben eines die Umgebungshelligkeit darstellende Helligkeitssignals betreibbare Sensoreinrichtung zugeordnet ist, **dadurch gekennzeichnet, dass** die Steuereinrichtung zum Unterbrechen der Abgabe von Licht an die Umgebung für die Dauer eines Dunkelintervalls und zum Abfragen und/oder Auswerten des Helligkeitssignals während des Dunkeltastintervalls ausgelegt ist.

2. Leuchte nach Anspruch 1, **dadurch gekennzeichnet, dass** die Sensoreinrichtung zumindest teilweise in einem geschützten Bauraum angeordnet ist.

3. Leuchte nach Anspruch 2, **dadurch gekennzeichnet, dass** der geschützte Bauraum in dem vorzugsweise als LED-Modul ausgeführten Leuchtmittel gebildet ist.

4. Leuchte nach einem der vorhergehenden Ansprüche, **dadurch gekennzeichnet, dass** der Sensoreinrichtung eine zum Ausgleichen von räumlichen Schwankungen der Umgebungshelligkeit betreibbare Ausgleichseinrichtung zugeordnet ist.

5. Leuchte nach Anspruch 4, **dadurch gekennzeichnet, dass** die Ausgleichseinrichtung eine Linse und/oder Streuscheibe aufweist.

6. Leuchte nach einem der vorhergehenden Ansprüche, **dadurch gekennzeichnet, dass** der Steuereinrichtung ein Zeitgeber zugeordnet ist und die Auswertung des Helligkeitssignals nur während eines von dem Zeitgeber vorgegebenen Auswertungsintervalls erfolgt.

7. Leuchte nach Anspruch 6, **dadurch gekennzeichnet, dass** die Steuereinrichtung zum Erfassen eines Deaktivierungszeitpunkts, zu dem das Helligkeitssignal einen vorgegebenen Wert überschreitet bzw. ein vorgegebenes Kriterium nicht mehr erfüllt, und zum Einstellen des Auswertungsintervalls in Abhängigkeit von dem Deaktivierungszeitpunkt betreibbar ist.

8. Verfahren zum Betreiben einer Leuchte, insbesondere Außenleuchte, nach einem der vorhergehenden Ansprüche, bei dem ein Leuchtmittel in Abhängigkeit von der Umgebungshelligkeit zum Abgeben von Licht an die Umgebung aktiviert wird, **dadurch gekennzeichnet, dass** die Abgabe von Licht an die Umgebung für die Dauer eines Dunkelintervalls unterbrochen, ein die Umgebungshelligkeit darstellendes Helligkeitssignals während des Dunkelintervalls abgefragt und/oder ausgewertet wird und das Leuchtmittel für die Dauer eines Hellintervalls aktiviert wird, wenn das Helligkeitssignal ein vorgegebenes Kriterium erfüllt.

9. Verfahren nach Anspruch 8, **dadurch gekennzeichnet, dass** das Tastverhältnis von Hellintervall zu Dunkelintervall größer als 10³, vorzugsweise größer als 10⁴, insbesondere 10⁵ oder größer , aber kleiner als 10⁹, insbesondere kleiner als 10⁸ ist.

10. Verfahren nach Anspruch 8 oder 9, **dadurch gekennzeichnet, dass** ein Deaktivierungszeitpunkt erfasst wird, zu dem das Helligkeitssignal das vorgegebene Kriterium nicht mehr erfüllt und ein folgendes Auswertungsintervall, während dem die Auswertung des Helligkeitssignals erfolgt, in Abhängigkeit von dem Deaktivierungszeitpunkt bestimmt wird.
